# EUROPÄISCHE PATENTSCHRIFT

(11) **EP 3 670 080 B1**
(45) Veröffentlichungstag und Bekanntmachung des Hinweises auf die Patenterteilung: **22.05.2024**
(21) Anmeldenummer: 18215233.0
(22) Anmeldetag: 21.12.2018
(51) Int. Cl.: B24B 27/08, B24B 41/02, B23D 45/16, B27B 5/29

(54) **HANDGEFÜHRTER TRENNSCHLEIFER**
HAND-HELD ABRASIVE CUT-OFF MACHINE
TRONÇONNEUSE GUIDÉE À LA MAIN

(43) Veröffentlichungstag der Anmeldung: 24.06.2020
(73) Patentinhaber: Hilti Aktiengesellschaft, 9494 Schaan (LI)
(72) Erfinder: Specht, Helmut, 86825 Bad Wörishofen (DE); Veik, Guenther, 6841 Maeder (AT)
(74) Vertreter: Hilti Aktiengesellschaft Corporate Intellectual Property

(56) Entgegenhaltungen:
- EP-A1- 2 832 497
- EP-A1- 3 380 271
- JP-A- 2016 101 628
- US-A1- 2018 319 004

## Beschreibung

### Technisches Gebiet

Die vorliegende Erfindung betrifft einen handgeführten Trennschleifer gemäß dem Oberbegriff des Anspruchs 1.

### Stand der Technik

Trennschleifer sind handgeführte Werkzeuggeräte mit einem Bearbeitungswerkzeug, das in Form einer rotierenden Trennscheibe ausgebildet ist. Die wesentlichen Komponenten eines Trennschleifers umfassen neben der Trennscheibe, die auf einer Spindel angeordnet ist und um eine Drehachse drehbar ist, ein Motorgehäuse mit einer Antriebseinheit und einen Ausleger mit einem Tragarm und einer Armabdeckung, die über Befestigungselemente am Tragarm befestigt wird. Der Tragarm ist mit einem ersten Ende am Motorgehäuse festgelegt und an einem zweiten Ende des Tragarms ist die Spindel mittels eines Lagerelementes festgelegt. Die Spindel ist über eine als Riemenantrieb ausgebildete Übertragungseinrichtung mit der Antriebseinheit verbunden. DE 103 25 663 A1 offenbart einen solchen handgeführten Trennschleifer.

Die während der Bearbeitung mit einem handgeführten Trennschleifer auftretenden Reaktionskräfte werden bei bekannten handgeführten Trennschleifern vom Tragarm aufgenommen. Daher spielen die Stabilität und Steifigkeit des Tragarms eine wichtige Rolle bei der konstruktiven Auslegung von handgeführten Trennschleifern; außerdem ist bei handgeführten Werkzeuggeräten die Gewichtsoptimierung grundsätzlich von Bedeutung. DE 103 25 663 A1 beschreibt einen handgeführten Trennschleifer mit einer einteiligen Ausbildung des Tragarms, was zu einer höheren Stabilität und Steifigkeit gegenüber mehrteiligen Tragarmen führen soll. Um das Gewicht zu reduzieren, sind im Tragarm zahlreiche Öffnungen und Aussparungen vorgesehen, wobei der Tragarm in den Öffnungen und Aussparungen Verstärkungsstreben besitzt, die die Steifigkeit erhöhen.

Bei handgeführten Trennschleifern ist die Schnitttiefe ein wichtiges Kriterium. EP 3 173 188 A1 beschreibt einen handgeführten Trennschleifer, der eine erhöhte Schnitttiefe erzielen kann. Dazu muss der Tragarm allerdings im Bereich seines zweiten Endes so kompakt und filigran wie möglich ausgebildet sein. Ein kompakter und filigraner Tragarm hat gleichzeitig den Nachteil, dass die Stabilität und Steifigkeit des Tragarms reduziert ist. Kräfte, die durch die Bearbeitung mit dem handgeführten Trennschleifer an der Trennscheibe auftreten, werden über die Spindel und deren Lagerelemente auf den Tragarm übertragen. Je grösser die Kräfte sind, die während der Bearbeitung an der Trennscheibe auftreten, umso grösser ist die Belastung des Tragarms.

Aus EP 2 832 497 A1 ist ein handgeführter Trennschleifer nach dem Oberbegriff des Anspruchs 1 bekannt. Der Trennschleifer umfasst neben einer Trennscheibe, die auf einer Spindel angeordnet ist und um eine Drehachse drehbar ist, ein Motorgehäuse mit einem Antriebsmotor und einen Ausleger mit einem Tragarm und einer Armabdeckung, die über Befestigungselemente am Tragarm befestigt wird. Der Tragarm ist als tragendes Gehäusebauteil ausgebildet und besteht aus einem Metallwerkstoff, insbesondere aus einem Leichtmetallwerkstoff. Eine günstige Krafteinleitung kann erreicht werden, wenn der Trennschleifer einen Griffbügel besitzt und mindestens ein Ende des Griffbügels am Tragarm ausgelegt ist, wodurch ein Grossteil der am Trennschleifer wirkenden Kräfte unmittelbar in den Tragarm eingeleitet werden kann.

### Darstellung der Erfindung

Die Aufgabe der vorliegenden Erfindung besteht darin, einen handgeführten Trennschleifer dahingehend weiterzuentwickeln, dass ein kompakter und filigraner Tragarm hohen Kräften standhalten kann. Beschädigungen des Tragarms sollen auch bei hohen Kräften nicht auftreten.

Diese Aufgabe wird bei dem eingangs genannten handgeführten Trennschleifer erfindungsgemäß durch die Merkmale des unabhängigen Anspruchs 1 gelöst. Vorteilhafte Weiterbildungen sind in den abhängigen Ansprüchen angegeben.

Erfindungsgemäß ist der handgeführte Trennschleifer dadurch gekennzeichnet, dass die Armabdeckung aus einem Metallwerkstoff gefertigt ist. Das mindestens eine Befestigungselement, das im Bereich der Abtriebsscheibe angeordnet ist, ermöglicht im Betrieb des handgeführten Trennschleifers eine Abstützung des Tragarms und zumindest einen Teil der auftretenden Kräfte in die Armabdeckung umzuleiten, wodurch die Belastung des Tragarms im Bereich seines zweiten Endes verringert werden kann. Eine Armabdeckung aus einem Metallwerkstoff hat gegenüber gewöhnlichen Armabdeckungen aus Kunststoffen den Vorteil, dass aufgrund des höheren Elastizitätsmoduls auftretende Kräfte von der Armabdeckung weitergeleitet werden können, ohne dass die Armabdeckung beschädigt wird.

In einer bevorzugten Weiterentwicklung ist das mindestens eine Befestigungselement oberhalb einer zweiten Ebene angeordnet, wobei die zweite Ebene von der Abtriebs-Drehachse und der Antriebs-Drehachse aufgespannt ist. Wenn das mindestens eine Befestigungselement oberhalb der zweiten Ebene angeordnet ist, wird die Schnitttiefe, die mit dem Trennschleifer erzielt werden kann, möglichst wenig verringert.

Bevorzugt ist die Armabdeckung aus einem Leichtmetallwerkstoff gefertigt. Als Leichtmetallwerkstoffe eignen sich beispielsweise Aluminium und Magnesium. Leichtmetallwerkstoffe reduzieren das Gewicht der Armabdeckung im Vergleich zu Metallwerkstoffen, wie Stahl.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: einen erfindungsgemäßen handgeführten Trennschleifer mit einer Trennscheibe, einem Motorgehäuse und einem Ausleger mit einer montierten Armabdeckung (FIG. 1A) und einer demontierten Armabdeckung (FIG. 1B);
- FIG. 2: einen Tragarm des Auslegers des handgeführten Trennschleifers der FIG. 1B im Detail; und
- FIG. 3: einen Bereich um die Abtriebswelle des handgeführten Trennschleifers in einer schematischen Darstellung.

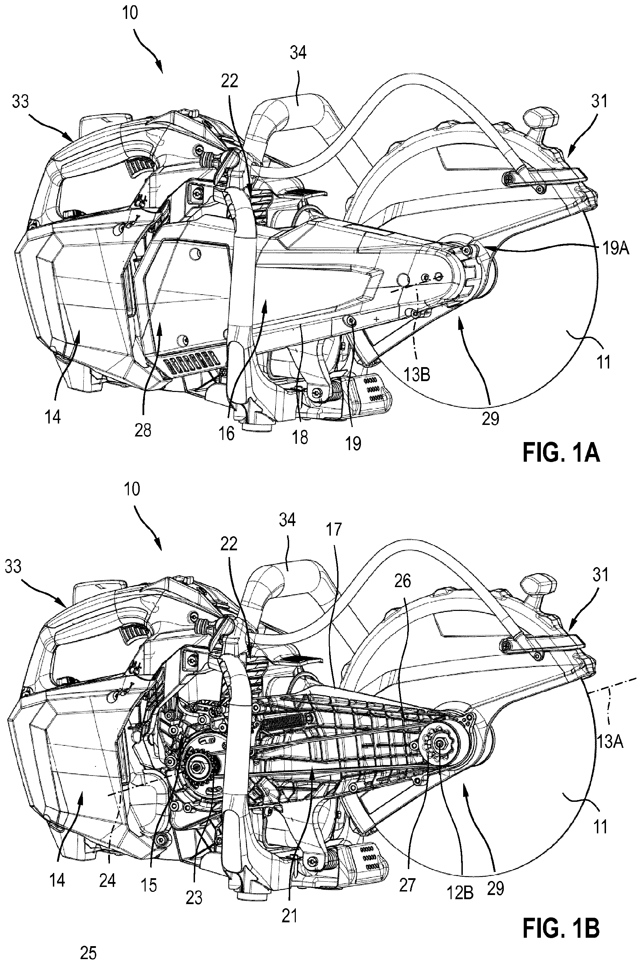

**FIGN. 1A****, B** zeigen ein erfindungsgemäßes handgeführtes Werkzeuggerät **10**, das in Form eines handgeführten Trennschleifers ausgebildet ist. Der Trennschleifer 10 ist in einer waagrechten Grundposition angeordnet, in der der Trennschleifer 10 auf einem waagerechten Untergrund angeordnet ist.

Der handgeführte Trennschleifer 10 weist ein als Trennscheibe **11** ausgebildetes Bearbeitungswerkzeug auf, das auf einer Spindel **12A** angeordnet ist und um eine Drehachse **13A** drehbar ist. Die Spindel 12A ist mit einer Abtriebswelle **12B** verbunden, die um eine Abtriebs-Drehachse **13B** drehbar ist. Im Ausführungsbeispiel sind die Spindel 12A und Abtriebswelle 12B einteilig ausgebildet und die Drehachse 13 und Abtriebs-Drehachse 13B sind koaxial zueinander ausgerichtet.

Der handgeführte Trennschleifer 10 umfasst neben der Trennscheibe 11 ein Motorgehäuse **14** mit einer Antriebseinheit **15** und einen Ausleger **16** mit einem Tragarm **17** und einer Armabdeckung **18.** Die Armabdeckung 18 ist über Befestigungselemente **19**, die als Schrauben ausgebildet sein können, am Tragarm 17 befestigt. FIG. 1A zeigt den handgeführten Trennschleifer 10 mit der befestigten Armabdeckung 18 und FIG. 1B zeigt den handgeführten Trennschleifer 10 ohne die Armabdeckung 18.

Der Antrieb der Trennscheibe 11 erfolgt über die Antriebseinheit 15, eine im Ausleger 16 angeordnete Übertragungseinrichtung **21**, die im gezeigten Ausführungsbeispiel als Riemenantrieb ausgebildet ist, und die Abtriebswelle 12. Unter dem Begriff "Antriebseinheit" werden sämtliche Antriebskomponenten zusammengefasst, die im Motorgehäuse 14 angeordnet sind. Im Motorgehäuse 14 ist ein Antriebsmotor **22** angeordnet, der im gezeigten Ausführungsbeispiel ein Verbrennungsmotor ist, aber auch ein Elektromotor sein kann. Zwischen dem Antriebsmotor 22 und dem Riemenantrieb 21 kann eine Fliehkraftkupplung angeordnet sein, die dafür sorgt, dass sich die Trennscheibe 11 bei geringen Drehzahlen, wie im Leerlauf oder beim Starten des handgeführten Trennschleifers 10, nicht dreht; außerdem können weitere Getriebekomponenten zwischen dem Antriebsmotor 22 und der Übertragungseinrichtung 21 angeordnet sein.

Der Antriebsmotor 22 treibt eine Antriebswelle **23** an, die um eine Antriebs-Drehachse **24** drehbar ist und mit einer Antriebsscheibe **25** verbunden ist. Ein als Antriebsriemen ausgebildetes Übertragungselement **26** ist über die Antriebsscheibe 25 und eine auf der Abtriebswelle 12 gelagerte Abtriebsscheibe **27** geführt. Die Antriebsscheibe 25, der Antriebsriemen 26 und die Abtriebsscheibe 27 bilden den Riemenantrieb 21. Die Übertragungseinrichtung 21 kann alternativ zum Riemenantrieb beispielsweise in Form eines Kettenantriebes ausgebildet sein, bei dem das Übertragungselement zwischen der Antriebsscheibe 25 und der Abtriebsscheibe 27 nicht als Antriebsriemen, sondern als Kette ausgebildet ist.

Die Übertragungseinrichtung 21, die die Abtriebswelle 12B mit der Antriebseinheit 15 verbindet, ist im Ausleger 16 angeordnet. Die Armabdeckung 18 dient unter anderem dazu, die rotierenden Komponenten der Übertragungseinrichtung 21 abzudecken und die Verletzungsgefahr zu reduzieren, dass der Bediener im Betrieb des handgeführten Trennschleifers 10 in die rotierenden Komponenten der Übertragungseinrichtung 21 greift. Der Tragarm 17 des Auslegers 16 ist an einem ersten Ende **28** am Motorgehäuse 14 festgelegt und an einem zweiten Ende **29** des Tragarms 17 ist die Abtriebswelle 12B mittels eines nicht dargestellten Lagerelementes festgelegt.

Die Trennscheibe 11 ist von einer Schutzhaube **31** umgeben, die zum Schutz des Bedieners vor umherfliegenden Partikeln dient und außerdem die Verletzungsgefahr reduziert, dass der Bediener im Betrieb des handgeführten Trennschleifers 10 in die rotierende Trennscheibe 11 greift. Die Schutzhaube 31 ist um eine Schwenkachse **32** schwenkbar ausgebildet, wobei die Schwenkachse 32 parallel zur Drehachse 13A der Spinde 12A verläuft.

Zur Bedienung des handgeführten Trennschleifers 10 ist ein erster Handgriff 33 vorgesehen, der als Top-Handle ausgebildet und oberhalb des Motorgehäuses 14 angeordnet ist. Alternativ kann der erste Handgriff als Rear-Handle, der auf der der Trennscheibe 11 abgewandten Seite des Motorgehäuses 14 angeordnet ist, ausgebildet sein. Zur Führung des handgeführten Trennschleifers 10 ist neben dem ersten Handgriff 33 ein zweiter Handgriff **34** vorgesehen, der zwischen der Trennscheibe 11 und dem ersten Handgriff 33 angeordnet ist. Der zweite Handgriff 34 ist im gezeigten Ausführungsbeispiel der FIGN. 1A, B als separates Griffrohr ausgebildet oder kann alternativ einteilig mit dem Motorgehäuse 14 ausgebildet sein.

Die Armabdeckung 18 ist Teil des Auslegers 16 und wird mittels der Befestigungselemente 19, die beispielsweise als Schrauben ausgebildet sind, am Tragarm 17 befestigt. Die Armabdeckung 18 und der Tragarm 17 können als Gussteile aus einem Metallwerkstoff gefertigt sein, aus Gewichtsgründen insbesondere als Gussteile aus einem Leichtmetallwerkstoff.

Die Verwendung eines Metallwerkstoffes für die Armabdeckung 18 ermöglicht es, Kräfte in die Armabdeckung 18 einzuleiten, ohne dass die Armabdeckung 18 beschädigt wird. Gewöhnliche Armabdeckungen für handgeführte Trennschleifer aus Kunststoff sind wegen des geringeren Elastizitätsmoduls für die Einleitung von Kräften ungeeignet; sie dienen ausschließlich zur Abdeckung der rotierenden Komponenten der Übertragungseinrichtung 22.

Während des Betriebs des handgeführten Trennschleifers 10 kommt es zu einer Bewegung der Spindel 12A und der Abtriebswelle 12B, die über Lagerelemente im Tragarm 17 geführt ist. Je höher die auftretenden Kräfte sind, umso grösser wird die Bewegung der Abtriebswelle 12 in einer Ebene senkrecht zur Abtriebs-Drehachse 13B.

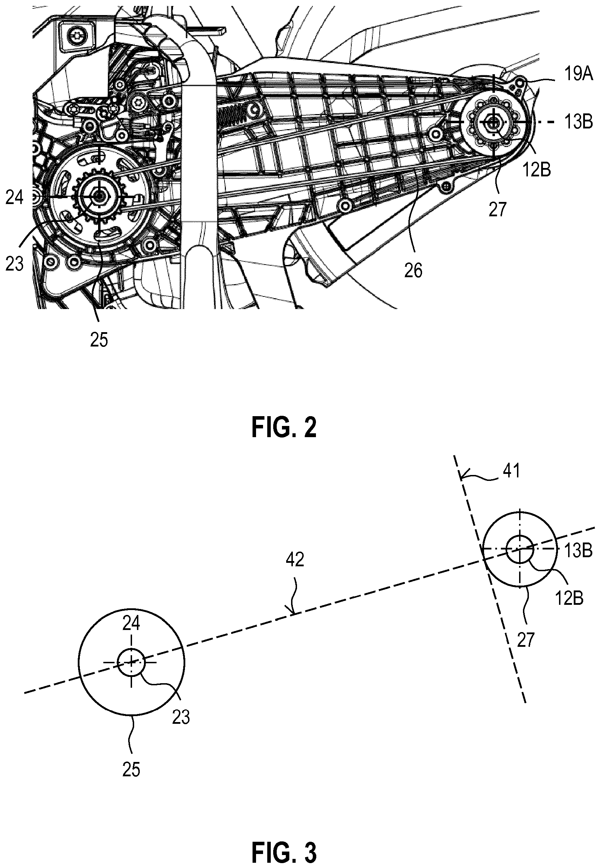

**FIG. 2** zeigt den Tragarm 17 und die Übertragungseinrichtung 22 im Detail. Das Drehmoment des Antriebsmotors 21 wird über die Antriebswelle 23, die Antriebsscheibe 25, das Übertragungselement 26 und die Abtriebsscheibe 27 auf die Abtriebswelle 12B übertragen. Die Antriebswelle 23 ist um die Antriebs-Drehachse 24 drehbar ausgebildet und die Abtriebswelle 12B ist um die Abtriebs-Drehachse 13B drehbar ausgebildet. Um die Auslenkung der Abtriebswelle 12B und damit die Belastungen auf den Tragarm 17 zu begrenzen, ist mindestens ein Befestigungselement 19A der mehreren Befestigungselemente 19 im Bereich der Abtriebswelle 12 angeordnet.

**FIG. 3** zeigt den Bereich um die Abtriebswelle 12B in einer schematischen Darstellung. Das Befestigungselement 19A ist in einem Raumsektor angeordnet, der von einer ersten Ebene **41** begrenzt ist.

Die erste Ebene 41 ist senkrecht zu einer Referenzebene tangential zur Abtriebsscheibe 27 angeordnet, wobei die erste Ebene 41 auf der der Antriebswelle 23 zugewandten Seite der Abtriebsscheibe 27 angeordnet ist und die Referenzebene von der Abtriebs-Drehachse 13B und der Antriebs-Drehachse 24 aufgespannt ist. Das Befestigungselement 19A ist auf der Seite der ersten Ebene 41 angeordnet, die der Antriebswelle 23 abgewandt ist.

Um die Schnitttiefe, die mit dem Trennschleifer 10 erzielt werden kann, möglichst wenig zu verringern, ist das Befestigungselement 19A in der waagerechten Grundposition des Trennschleifers 10 oberhalb einer zweiten Ebene **42** angeordnet, die von der Abtriebs-Drehachse 13B der Abtriebswelle 12B und der Antriebs-Drehachse 24 der Antriebswelle 23 aufgespannt wird.

## Patentansprüche

1. Handgeführter Trennschleifer (10), aufweisend:
▪ eine Trennscheibe (11), die auf einer Spindel (12A) angeordnet ist und um eine Drehachse (13A) drehbar ist, wobei die Spindel (12A) mit einer um eine Abtriebs-Drehachse (13B) drehbaren Abtriebswelle (12B) verbunden ist,
▪ ein Motorgehäuse (14) mit einem Antriebsmotor (21), der eine Antriebswelle (23) um eine Antriebs-Drehachse (24) bewegt, wobei die Antriebswelle (23) über eine Antriebsscheibe (25), ein Übertragungselement (26) und eine Abtriebsscheibe (27) mit der Abtriebswelle (12B) drehmomentübertragend verbunden ist, und
▪ einen Ausleger (16) mit einer Armabdeckung (18) und einem Tragarm (17), der mit einem ersten Ende (28) am Motorgehäuse (14) festgelegt ist und an dessen zweitem Ende (29) die Abtriebswelle (12B) gelagert ist, wobei die Armabdeckung (18) über mehrere Befestigungselemente (19) am Tragarm (17) befestigt ist,
wobei mindestens ein Befestigungselement (19A) der mehreren Befestigungselemente (19) auf einer der Antriebswelle (23) abgewandten Seite einer ersten Ebene (41) angeordnet ist, wobei die erste Ebene (41) senkrecht zu einer Referenzebene tangential zur Abtriebsscheibe (27) auf der der Antriebswelle (23) zugewandten Seite der Abtriebsscheibe (27) angeordnet ist und die Referenzebene von der Abtriebs-Drehachse (13B) und der Antriebs-Drehachse (24) aufgespannt ist,
**dadurch gekennzeichnet, dass** die Armabdeckung (18) aus einem Metallwerkstoff gefertigt ist.

2. Trennschleifer nach Anspruch 1, **dadurch gekennzeichnet, dass** das mindestens eine Befestigungselement (19A) oberhalb einer zweiten Ebene (42) angeordnet ist, wobei die zweite Ebene (42) von der Abtriebs-Drehachse (13B) und der Antriebs-Drehachse (24) aufgespannt ist.

3. Trennschleifer nach einem der Ansprüche 1 bis 2, **dadurch gekennzeichnet, dass** die Armabdeckung (18) aus einem Leichtmetallwerkstoff gefertigt ist.

## Claims

1. Hand-held cut-off grinder (10), comprising:
• a cutting disc (11) which is arranged on a spindle (12A) and can be rotated about a rotational axis (13A), the spindle (12A) being connected to an output shaft (12B) which can be rotated about an output rotational axis (13B),
• a motor housing (14) with a drive motor (21) which moves a drive shaft (23) about a drive rotational axis (24), the drive shaft (23) being connected in a torque-transmitting manner via a drive disc (25), a transmission element (26) and an output disc (27) to the output shaft (12B), and
• a cantilever (16) with an arm cover (18) and a support arm (17) which is fixed by way of a first end (28) on the motor housing (14) and at the second end (29) of which the output shaft (12B) is mounted, the arm cover (18) being fastened to the support arm (17) via a plurality of fastening elements (19),
at least one fastening element (19A) of the plurality of fastening elements (19) being arranged on a side, facing away from the drive shaft (23), of a first plane (41), the first plane (41) being arranged perpendicularly with respect to a reference plane tangentially with respect to the output disc (27) on that side of the output disc (27) which faces the drive shaft (23), and the reference plane being defined by the output rotational axis (13B) and the drive rotational axis (24),
**characterized in that** the arm cover (18) is manufactured from a metal material.

2. Cut-off grinder according to Claim 1, **characterized in that** the at least one fastening element (19A) is arranged above a second plane (42), the second plane (42) being defined by the output rotational axis (13B) and the drive rotational axis (24).

3. Cut-off grinder according to either of Claims 1 or 2, **characterized in that** the arm cover (18) is manufactured from a light metal material.

## Revendications

1. Tronçonneuse à disque à main (10), comprenant :
▪ un disque de tronçonnage (11) qui est disposé sur une broche (12A) et qui peut tourner sur un axe de rotation (13A), la broche (12A) étant reliée à un arbre de sortie (12B) pouvant tourner sur un axe de rotation de sortie (13B),
▪ un boîtier de moteur (14) comprenant un moteur d'entraînement (21) qui déplace un arbre d'entraînement (23) en rotation sur un axe de rotation d'entraînement (24), l'arbre d'entraînement (23) étant relié à l'arbre de sortie (12B) par transmission de couple par le biais une poulie d'entraînement (25), d'un élément de transmission (26) et d'une poulie de sortie (27), et
▪ une flèche (16) comprenant un capot de bras (18) et un bras de support (17), qui est fixé par une première extrémité (28) au boîtier de moteur (14) et à la deuxième extrémité (29) duquel l'arbre de sortie (12B) est monté, le capot de bras (18) étant fixé au bras de support (17) par le biais de plusieurs éléments de fixation (19),
au moins un élément de fixation (19A) des plusieurs éléments de fixation (19) étant disposé sur un côté d'un premier plan (41) qui est opposé à l'arbre d'entraînement (23), le premier plan (41) étant disposé perpendiculairement à un plan de référence tangentiellement au disque de sortie (27) sur un côté du disque de sortie (27) qui est dirigé vers l'arbre d'entraînement (23) et le plan de référence passant par l'axe de rotation de sortie (13B) et l'axe de rotation d'entraînement (24),
**caractérisée en ce que** le capot de bras (18) est réalisé en une matière métallique.

2. Tronçonneuse à disque selon la revendication 1, **caractérisée en ce que** l'au moins un élément de fixation (19A) est disposé au-dessus d'un deuxième plan (42), le deuxième plan (42) passant par l'axe de rotation de sortie (13B) et l'axe de rotation d'entraînement (24).

3. Tronçonneuse à disque selon l'une des revendications 1 à 2, **caractérisée en ce que** le capot de bras (18) est réalisé en une matière métallique légère.
